# EUROPÄISCHE PATENTSCHRIFT

(11) **EP 3 384 627 B1**
(45) Veröffentlichungstag und Bekanntmachung des Hinweises auf die Patenterteilung: **08.01.2020**
(21) Anmeldenummer: 16804692.8
(22) Anmeldetag: 28.11.2016
(51) Int. Cl.: H04L 9/08, H04L 9/32, H04W 4/80

(54) **VERFAHREN UND VORRICHTUNG FÜR DIE SICHERE SPEICHERUNG ELEKTRONISCHER IDENTIFIKATIONSDOKUMENTE AUF EINEM MOBILEN ENDGERÄT**
METHOD AND APPARATUS FOR SECURELY STORING ELECTRONIC IDENTIFICATION DOCUMENTS ON A MOBILE TERMINAL
PROCÉDÉ ET DISPOSITIF DE MISE EN MÉMOIRE SÉCURISÉE DE DOCUMENTS D'IDENTIFICATION ÉLECTRONIQUES SUR UN TERMINAL MOBILE

(30) Priorität: 30.11.2015 DE 102015015502
(43) Veröffentlichungstag der Anmeldung: 10.10.2018
(73) Patentinhaber: Giesecke+Devrient Mobile Security GmbH, 81677 München (DE)
(72) Erfinder: EICHHOLZ, Jan, 80997 München (DE); SCHMALZ, Frank, 81371 München (DE)
(86) Internationale Anmeldenummer: PCT/EP2016/002005
(87) Internationale Veröffentlichungsnummer: WO 2017/092861

(56) Entgegenhaltungen:
- EP-A2- 1 282 026
- US-A1- 2014 013 406
- US-A1- 2015 081 538

## Beschreibung

Die Erfindung betrifft allgemein auf mobilen Endgeräten vorliegende elektronische Identifikationsdokumente und betrifft insbesondere ein Verfahren zur sicheren Speicherung eines elektronischen Identifikationsdokuments auf einem mobilen Endgerät sowie ein Verfahren zum sicheren Auslesen eines solchermaßen gespeicherten elektronischen Identifikationsdokuments. Die Erfindung betrifft ferner ein mobiles Endgerät zum Einsatz in derartigen Verfahren.

Einheitliche Dokumentenstandards erleichtern es Grenzbeamten, die Gültigkeit von Ausweisdokumenten schnell und zuverlässig zu prüfen. Sie sorgen daher für Sicherheit und Komfort auf Reisen und erlauben es Reisenden teilweise sogar, vollautomatisierte Kontrollen zu passieren. Die Dokumentenstandards werden auf internationaler Ebene festgelegt, beispielsweise durch Gremien der Internationalen Zivilluftfahrt-Organisation (ICAO) oder der Internationalen Organisation für Normung (ISO). Wesentliche Vorgaben für Reisepässe, ID-Dokumente und Führerscheine finden sich insbesondere in dem ICAO Standard Doc9303 und der ISO 18013. Im Rahmen dieser Beschreibung wird der Begriff Identifikationsdokument als Oberbegriff für Reisepässe, Führerscheine und andere ID-Dokumente verwendet.

Seit kurzem gibt es Überlegungen, solche Identifikationsdokumente in elektronischer Form auf Mobiltelefone zu übertragen. Dabei könnte das Identifikationsdokument vollständig in die SIM-Karte des Mobiltelefons eingebracht und bei einem Auslesevorgang mit einem Inspektionssystem über eine Nahfeldkommunikations (NFC)- Schnittstelle ausgelesen werden. Eine solche Lösung bietet ein hohes Maß an Sicherheit der Daten und hohe Fälschungssicherheit, da sich das gesamte Identifikationsdokument in der SIM-Karte befindet und die verschlüsselte Kommunikation durchgängig von der SIM-Karte bis in das Inspektionssystem reicht.

Allerdings sind herkömmliche SIM-Karten nicht für die schnelle Übertragung der benötigten großen Datenmengen optimiert. Im Gegensatz zum elektronischen Zahlungsverkehr müssen beim Auslesen eines elektronischen Identifikationsdokuments wegen der enthaltenen biometrischen Merkmale, beispielsweise eines Gesichtsbilds oder von Fingerabdrücken, größere Datenmengen von mindestens 25 kB übertragen werden. Ohne besondere Optimierung beträgt der Zeitbedarf für das Auslesen und Prüfen eines elektronischen Identifikationsdokuments daher etwa 20 Sekunden, was ein signifikantes Hindernis für die Einführung solcher elektronischer Dokumente darstellt.

Entsprechend müssten für das Einbringen von Identifikationsdokumenten in eine SIM-Karte speziell angepasste SIM-Karten mit den notwendigen kryptographischen Methoden und mit einer Erweiterung des Betriebssystems zur Beschleunigung des ISO Secure Messagings verwendet werden. Der erforderlichen Anpassung der Speichergröße und der Standardisierung einer Beschleuniger-Schnittstelle steht allerdings der hohe Kostendruck im SIM-Kartenbereich entgegen.

Der Stand der Technik umfasst des Weiteren die Offenlegungsschriften US 2014/013406 A1, EP 1282026 A2 und US 2015/081538 A1.

Ausgehend davon liegt der Erfindung die Aufgabe zugrunde, die Nachteile des Stands der Technik zu vermeiden und insbesondere einen Weg aufzuzeigen, ein elektronisches Identifikationsdokument in einem Mobiltelefon sicher in einer Weise abzulegen, dass es schnell ausgelesen und geprüft werden kann.

Diese Aufgabe wird durch die Merkmale der unabhängigen Ansprüche gelöst. Weiterbildungen der Erfindung sind Gegenstand der abhängigen Ansprüche.

Der Grundgedanke der Erfindung besteht dabei darin, die eine hohe Performance beim Auslesen eines elektronischen Identifikationsdokuments von einem Mobiltelefon dadurch zu erreichen, dass nur die sicherheitskritische Operation des Kopierschutzes in einem sicheren Element des Mobiltelefons durchgeführt wird, während die sichere Übertragung der Daten von dem wesentlich leistungsfähigeren Applikationsprozessor des Mobiltelefons übernommen wird. Ein geeignet gespeichertes elektronisches Identifikationsdokument lässt sich dann durch das Zusammenspiel der im Speicher des leistungsfähigen Applikationsprozessors abgelegten biographischen Daten und von im sicheren Element abgelegten kryptographischen Daten sowohl schnell als auch sicher auslesen, wie nachfolgend im Detail erläutert.

Die Erfindung ist durch die unabhängigen Ansprüche 1, 5 und 9 definiert.

Die Erfindung enthält zunächst ein Verfahren zur sicheren Speicherung eines elektronischen Identifikationsdokuments auf einem mobilen Endgerät, welches einen Applikationsprozessor mit einem Applikationsprozessorspeicher und ein sicheres Element aufweist, bei dem
- kryptographische Daten für den Kopierschutz des elektronischen Identifikationsdokuments in dem sicheren Element gespeichert werden, und
- ein Biographiedatenobjekt, das die gewünschten biographischen Daten des elektronischen Identifikationsdokuments aufweist, digital signiert wird und die signierten Daten in dem Applikationsprozessorspeicher gespeichert werden.

Mit Vorteil ist dabei vorgesehen, dass die kryptographischen Daten einen privaten Schlüssel K_{SE_priv} des sicheren Elements umfassen, und dass das Biographiedatenobjekt einen zugehörigen zertifizierten öffentlichen Schlüssel K_{SE_pub} des sicheren Elements enthält.

Die biographischen Daten des elektronischen Identifikationsdokuments umfassen vorteilhaft biometrische Daten, insbesondere ein biometrisches Gesichtsbild und/oder einen oder mehrere Fingerabdrücke. Die Signatur des Biographiedatenobjekts wird bei dem Speicherungsverfahren mit Vorteil mit einem privaten Schlüssel K_{PB_priv} einer Personalisierungsbehörde erzeugt. Der zugehörige öffentliche Schlüssel K_{PB_pub} der Personalisierungsbehörde ist den Inspektionssystemen vorteilhaft bekannt, so dass diese die Signatur verifizieren können. Das mobile Endgerät stellt beispielsweise ein Mobiltelefon, insbesondere ein Smartphone dar.

Durch ein solches Speicherverfahren wird das elektronische Identifikationsdokument manipulationsgeschützt auf dem mobilen Endgerät abgelegt, so dass es in einem nachfolgend beschriebenen Ausleseverfahren schnell und zuverlässig von dem Endgerät ausgelesen werden kann.

Für das Auslesen des Identifikationsdokuments enthält die Erfindung ein Verfahren zum sicheren Auslesen eines elektronischen Identifikationsdokuments, das gemäß einem Speicherverfahren der oben beschriebenen Art auf einem mobilen Endgerät gespeichert worden ist, welches einen Applikationsprozessor mit einem Applikationsprozessorspeicher und ein sicheres Element aufweist. Bei diesem Ausleseverfahren
- wird das Biographiedatenobjekt von dem Applikationsprozessor aus dem Applikationsprozessorspeicher an ein Inspektionssystem übertragen,
- extrahiert das Inspektionssystem die biographischen Daten aus dem übertragenen Biographiedatenobjekt,
- wird mit den in dem sicheren Element gespeicherten kryptographischen Daten eine Echtheitsprüfung der extrahierten biographischen Daten durchgeführt, und
- betrachtet das Inspektionssystem nur im Fall einer erfolgreichen Echtheitsprüfung die extrahierten biographischen Daten des elektronischen Identifikationsdokuments als gültig.

In einer vorteilhaften Verfahrensvariante umfassen die kryptographischen Daten einen privaten Schlüssel K_{SE_priv} des sicheren Elements und das Biographiedatenobjekt enthält einen zugehörigen zertifizierten öffentlichen Schlüssel K_{SE_pub} des sicheren Elements. Dabei wird der öffentliche Schlüssel K_{SE_pub} des sicheren Elements zusammen mit den biographischen Daten aus dem Biographiedatenobjekt extrahiert und ist dem Inspektionssystem daher nach dem Extraktionsschritt bekannt. Zur Echtheitsprüfung ist dann weiter vorgesehen, dass
- das Inspektionssystem eine Aufforderung an das sichere Element übermittelt,
- das sichere Element die übermittelte Aufforderung mit seinem privaten Schlüssel K_{SE_priv} signiert und die signierte Aufforderung als Antwort an das Inspektionssystem übermittelt, und
- das Inspektionssystem die übermittelte Antwort mit Hilfe des aus dem Biographiedatenobjekt extrahierten öffentlichen Schlüssels K_{SE_pub} verifiziert und nur im Fall einer erfolgreichen Verifikation eine erfolgreiche Echtheitsprüfung feststellt.

Bei der Aufforderung handelt es typischerweise um eine Aufforderung in einem Challenge-Response-Verfahren, beispielsweise in Form einer großen Zufallszahl bzw. Pseudozufallszahl.

Mit Vorteil verifiziert das Inspektionssystem bei dem Verfahren mit Hilfe des öffentlichen Schlüssels K_{PB_pub} einer Personalisierungsbehörde auch die Signatur des Biographiedatenobjekts, um sicherzustellen, dass das Biographiedatenobjekt nicht manipuliert wurde.

Durch die vorgenommen Echtheitsprüfung ist zudem sichergestellt, dass das extrahierte Biographiedatenobjekt nicht geklont worden ist, sondern tatsächlich zu dem ausgelesenen mobilen Endgerät gehört. Nur in diesem Fall kann nämlich die Verifikation der mit dem privaten Schlüssel K_{SE_priv} signierten Aufforderung mit dem aus dem Biographiedatenobjekt extrahierten öffentlichen Schlüssel K_{SE_pub} gelingen.

In einer vorteilhaften Verfahrensvariante wird das Biographiedatenobjekt von dem Applikationsprozessor über eine Nahfeldkommunikations (NFC)-Schnittstelle an das Inspektionssystem übertragen. Dazu wird insbesondere im Rahmen einer Host Card Emulation (HCE), die auf dem Applikationsprozessor ausgeführt wird, über die NFC-Schnittstelle eine Smartcard simuliert. Die rechenintensiven Operationen des Auslesevorgangs, nämlich die Übertragung der Daten und die Verschlüsselung der Luftschnittstelle werden somit auf dem Applikationsprozessor ausgeführt, so dass für diese Funktionen ausreichend Leistung zur Verfügung steht. Zudem ist der Applikationsprozessor des mobilen Endgeräts typischerweise über eine performante Schnittstelle an den NFC-Controller des Endgeräts angebunden. An das sichere Element werden dagegen nur geringe Rechenanforderungen gestellt, es muss lediglich die übermittelte Aufforderung mit seinem privaten Schlüssel KsE_priv signieren, also beispielsweise eine RSA Signatur rechnen. Für das sichere Element können somit beispielsweise Standard eSE oder SIM-Karten verwendet werden, da nur Speicherplatz und Code für den privaten Schlüssel K_{SE_priv} und das Rechnen der RSA-Signatur benötigt werden.

Auch wenn gegenwärtig die Nahfeldkommunikation für die Datenübertragung bevorzugt ist, kann das Verfahren anstelle der NFC-Schnittstelle grundsätzlich auch andere Übertragungswege nutzen, insbesondere Bluetooth Low Energy, WLAN, VCode, Flicker Code auf einem Display des mobilen Endgeräts, oder auch andere optische Verfahren. Gerade optische Verfahren können praktisch von großer Bedeutung sein, da viele Inspektionssysteme über Vollseiten-Dokumentenleser verfügen.

In einem weiteren Aspekt stellt die Erfindung ein mobiles Endgerät bereit, das einen Applikationsprozessor mit einem Applikationsprozessorspeicher und ein sicheres Element aufweist, und das dazu ausgestaltet ist, im Rahmen der oben beschriebenen Speicher- und Ausleseverfahren eingesetzt zu werden.

Mit Vorteil weist das mobile Endgerät eine Schnittstelle für die Nahbereichskommunikation auf, wobei NFC derzeit besonders bevorzugt ist. Das mobile Endgerät enthält daher insbesondere einen NFC-Controller und eine NFC-Antenne für die Nahfeldkommunikation.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung der an einem Auslesevorgang eines auf einem Smartphone gespeicherten elektronischen Identifikationsdokuments beteiligten Komponenten, und
- Fig. 2: den Verfahrensablauf beim sicheren Auslesen eines elektronischen Identifikationsdokuments nach einem Ausführungsbeispiel der Erfindung.

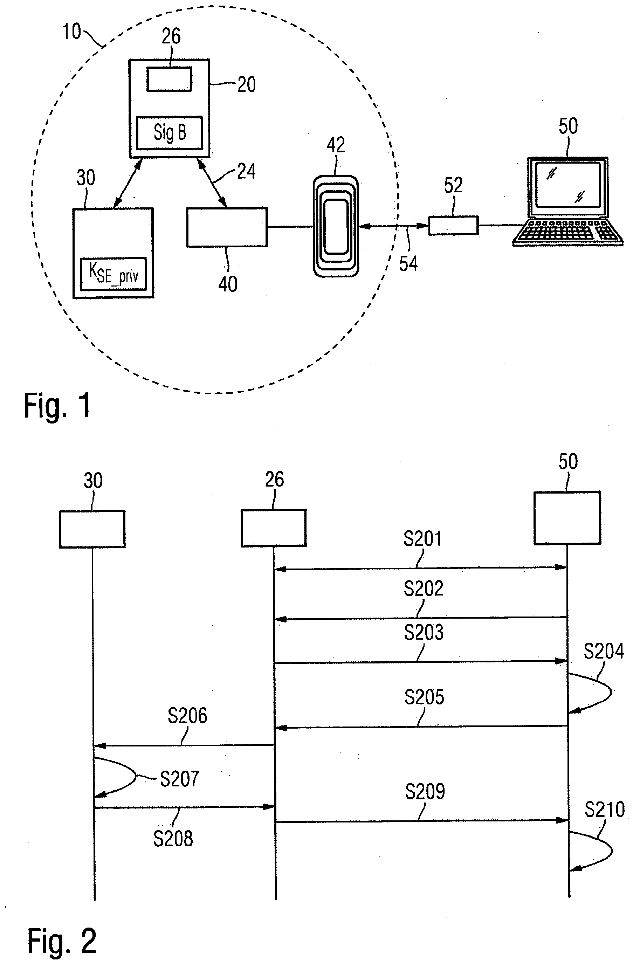

Die Erfindung wird nun am Beispiel eines Auslesevorgangs eines auf einem Smartphone 10 gespeicherten elektronischen Identifikationsdokuments erläutert. Figur 1 zeigt dazu schematisch die am Auslesevorgang beteiligten Komponenten und Fig. 2 stellt den zugehörigen Verfahrensablauf beim sicheren Auslesen des gespeicherten elektronischen Identifikationsdokuments dar.

Das als mobiles Endgerät eingesetzte Smartphone 10 enthält neben anderen, für die vorliegende Erfindung nicht wesentlichen Komponenten, insbesondere einen Applikationsprozessor 20 mit einem Applikationsprozessorspeicher 22, ein sicheres Element 30, einen NFC-Controller 40 und eine NFC-Antenne 42. Das sichere Element 30 ist beispielsweise in Form einer SIM-Karte, eines embedded Secure Elements oder eines Trusted Execution Environments (TEE) ausgebildet.

Das elektronische Identifikationsdokument stellt im Ausführungsbeispiel einen elektronischen Reisepass dar, der neben herkömmlichen biographischen Daten des Inhabers, wie etwa Vor- und Nachnahme, Geburtstag, Geschlecht und Nationalität, auch biometrische Daten, insbesondere ein biometrisches Gesichtsbild und Fingerabdrücke der beiden Zeigefingers des Inhabers aufweist. Die herkömmlichen biographischen Daten und die biometrischen Daten werden in der vorliegenden Beschreibung zusammen als biographische Daten BD bezeichnet.

Das elektronische Identifikationsdokument enthält weiter einen signierten öffentlichen Schlüssel K_{SE_pub} des sicheren Elements 30 des Smartphones 10 in Form eines Zertifikats Z. Die biographischen Daten BD bilden zusammen mit dem Zertifikat Z ein Biographiedatenobjekt B = BD ∥ Z, wobei das Symbol "∥" die Konkatenierung von Daten bezeichnet.

Dieses Biographiedatenobjekt B = BD ∥ Z wurde bei der Ausgabe des elektronischen Reisepasses von einer Personalisierungsbehörde mit einem privaten Schlüssel K_{PB_priv} der Personalisierungsbehörde digital signiert um eine nachträgliche Modifikation der biographischen Daten BD und des Zertifikats Z zu verhindern.

Das signierte Biographiedatenobjekt SigB = B ∥ SIG(B, K_{PB_priv}) ist in dem Speicher 22 des Applikationsprozessors 20 des Smartphones 10 abgelegt, der zwar selbst keinen gesicherten Speicherbereich darstellt, der jedoch über eine performante Schnittstelle 24 mit dem NFC-Controller 40 verbunden ist und daher beim Auslesevorgang eine schnelle verschlüsselte Übertragung des relativ großen signierten Biographiedatenobjekts SigB an ein Inspektionssystem 50 erlaubt. Da das signierte Biographiedatenobjekt SigB mit dem biometrischen Daten (Gesichtsbild und Fingerabdrücke) große Datenmengen von mindestens 25 kB, typischerweise sogar etwa 60 kB, enthält, ist eine performante Anbindung an den NFC-Controller 40 für ein schnelles Auslesen der biographischen Daten von entscheidender Bedeutung.

Um der Tatsache Rechnung zu tragen, dass das signierte Biographiedatenobjekt SigB nicht in einem gesicherten Speicherbereich abgelegt ist, wird der Kopierschutz des Biographiedatenobjekts durch das sichere Element 30 mit den darin gespeicherten kryptographischen Daten gewährleistet. Konkret enthält das sichere Element 30 einen privaten Schlüssel K_{SE_priv} eines asymmetrischen Kryptosystems, dessen zugehöriger signierter öffentlicher Schlüssel K_{SE_pub} als Zertifikat Z im Biographiedatenobjekt B enthalten ist.

Durch das Zusammenspiel des im performant angebundenen Applikationsprozessorspeicher 22 abgelegten signierten Biographiedatenobjekts SigB mit dem asymmetrischen Kryptosystem des sicheren Elements 30 kann das elektronische Identifikationsdokument schnell und dennoch sicher ausgelesen werden:
Auf Seiten des Smartphones 10 wird der Auslesevorgang von einer auf dem Applikationsprozessor 20 laufenden Anwendung gesteuert, die nachfolgend als Mobile-ID-App 26 bezeichnet ist. Um einen sicheren Auslesevorgang des auf dem Smartphone 10 gespeicherten elektronischen Identifikationsdokuments durch ein Inspektionssystem 50 einzuleiten, beispielsweise bei einer Grenzkontrolle, wird das Smartphone 10 auf ein NFC-Lesegerät 52 des Inspektionssystems 50 gelegt. Über die NFC-Schnittstelle wird in einem Schritt S201 in an sich bekannter Weise ein sicherer authentischer Übertragungskanal 54 zwischen dem Inspektionssystem 50 und der Mobile-ID-App 26 des Smartphones 10 aufgebaut. Beispielsweise kann ein sicherer Kanal mit Hilfe des SAC (Supplemental Access Control)-Sicherheitsprotokolls erfolgen, bei dem das PACE (Password Authenticated Connection Establishment)-Protokoll zum Einsatz kommt.

Nach Aufbau des sicheren authentischen Übertragungskanals sendet das Inspektionssystem 50 über diesen Kanal in Schritt S202 eine Aufforderung zur Übermittlung der biographischen Daten und des Zertifikats für den Kopierschutz an die Mobile-ID-App 26. Die Mobile-ID-App 26 und damit der Applikationsprozessor 20 übermittelt daraufhin in Schritt S203 das im Applikationsprozessorspeicher 22 abgelegte signierte Biographiedatenobjekt SigB an das Inspektionssystem 50.

In Schritt S204 extrahiert das Inspektionssystem 50 die biographischen Daten BD und das Zertifikat Z aus dem übermittelten signierten Biographiedatenobjekt SigB. Weiter verifiziert das Inspektionssystem 50 mit Hilfe des ihm bekannten öffentlichen Schlüssels K_{PB_pub} der Personalisierungsbehörde die Signatur des Biographiedatenobjekts SIG(B, K_{PB_priv}) und stellt damit dessen Authentizität sicher.

Nun prüft das Inspektionssystem 50 noch den Kopierschutz des Biographiedatenobjekts um weiter sicherzustellen, dass das von dem Smartphone 10 ausgelesene Biographiedatenobjekt B tatsächlich zu diesem Smartphone gehört und nicht von einem anderen mobilen Endgerät geklont wurde. Dazu übermittelt das Inspektionssystem 50 in Schritt S205 eine Aufforderung eines Challenge-Response-Verfahrens, beispielsweise eine große Zufallszahl s, an die Mobile-ID-App 26, welche die Aufforderung in Schritt S206 an das sichere Element 30 weiterreicht.

Das sichere Element 30 signiert in Schritt S207 die Zufallszahl s mit seinem privaten Schlüssel K_{SE_priv} und übermittelt die signierte Aufforderung SIG(s, K_{SE_priv}) als Antwort des Challenge-Response-Verfahrens in Schritt S208 an die Mobile-ID-App 26, welche diese in Schritt S209 an das Inspektionssystem 50 weiterreicht.

Dem Inspektionssystem 50 ist aus dem Biographiedatenobjekt B das Zertifikat Z und damit der öffentliche Schlüssel K_{SE_pub} des sicheren Elements 30 bekannt. Das Inspektionssystem 50 kann somit mit diesem öffentlichen Schlüssel in Schritt S210 die Signatur der Zufallszahl s verifizieren und im Fall einer erfolgreichen Verifikation davon ausgehen, dass das Biographiedatenobjekt B tatsächlich zu dem ausgelesenen Smartphone 10 gehört und nicht geklont wurde. Wurde das Biographiedatenobjekt nämlich von einem anderen Smartphone nur auf das ausgelesene Smartphone übertragen, so passen der öffentlichen Schlüssel K_{SE2_pub} des sicheren Elements SE2 des anderen Smartphones und der für die Signatur der Aufforderung verwendete private Schlüssel K_{SE_priv} des sicheren Elemente SE des ausgelesenen Smartphones nicht zusammen und die Verifikation muss misslingen. Durch die beschriebene Vorgehensweise ist somit der Kopierschutz trotz der Speicherung des Biographiedatenobjekts in einem selbst nicht abgesicherten Speicherbereich sichergestellt.

Das beschriebene Ausleseverfahren bietet eine sehr gute Performance, da die nicht sicherheitskritischen Funktionen, nämlich die Datenübermittlung des Biographiedatenobjekts und die Verschlüsselung der Luftschnittstelle von dem Applikationsprozessor 20 des Smartphones mit hoher Geschwindigkeit ausgeführt werden können. Im sicheren Element 30, das selbst typischerweise nur schlecht an den NFC-Controller 40 des Smartphones 10 angebunden ist, müssen nur die sicherheitskritischen Funktionen ausgeführt werden, nämlich die Signierung einer übermittelten Aufforderung mit dem privaten Schlüssel K_{SE_priv}. Insgesamt ist das beschriebene Ausleseverfahren nicht nur sehr schnell, sondern auch zuverlässiger als Lösungen, bei denen das gesamte elektronische Identifikationsdokument in einer SIM-Karte abgelegt ist, da das Feld des NFC-Lesers bei der erfindungsgemäßen Lösung nicht die SIM-Karte und den NFC-Controller mit Energie versorgen muss.

## Patentansprüche

1. Verfahren zur sicheren Speicherung eines elektronischen Identifikationsdokuments auf einem mobilen Endgerät, welches einen Applikationsprozessor mit einem Applikationsprozessorspeicher und ein sicheres Element aufweist, bei dem
- ein digital signiertes Biographiedatenobjekt, das gewünschte biographische Daten des elektronischen Identifikationsdokuments aufweist, in dem Applikationsprozessorspeicher gespeichert wird und
- kryptographische Daten für den Kopierschutz des digital signierten Biographiedatenobjektes in dem sicheren Element gespeichert werden, wobei der Kopierschutz sicherstellt, dass das digital signierte Biographiedatenobjekt zu dem mobilen Endgerät gehört.

2. Verfahren nach Anspruch 1, **dadurch gekennzeichnet, dass**
- die kryptographischen Daten einen privaten Schlüssel K_{SE_priv} des sicheren Elements umfassen, und
- das digital signierte Biographiedatenobjekt einen zugehörigen zertifizierten öffentlichen Schlüssel K_{SE_pub} des sicheren Elements enthält.

3. Verfahren nach Anspruch 1 oder 2, **dadurch gekennzeichnet, dass** die gewünschten biographischen Daten des elektronischen Identifikationsdokuments biometrische Daten, insbesondere ein biometrisches Gesichtsbild und/oder einen oder mehrere Fingerabdrücke umfassen.

4. Verfahren nach wenigstens einem der Ansprüche 1 bis 3, **dadurch gekennzeichnet, dass** die Signatur des digital signierten Biographiedatenobjekts mit einem privaten Schlüssel K_{PB_priv} einer Personalisierungsbehörde erzeugt wird.

5. Verfahren zum sicheren Auslesen eines elektronischen Identifikationsdokuments, das gemäß einem Verfahren nach einem der Ansprüche 1 bis 4 auf einem mobilen Endgerät gespeichert worden ist, welches einen Applikationsprozessor mit einem Applikationsprozessorspeicher und ein sicheres Element aufweist, wobei bei dem Verfahren
- ein digital signiertes Biographiedatenobjekt von dem Applikationsprozessor aus dem Applikationsprozessorspeicher an ein Inspektionssystem übertragen wird,
- das Inspektionssystem biographische Daten aus dem übertragenen, digital signierten Biographiedatenobjekt extrahiert,
- mit in dem sicheren Element gespeicherten kryptographischen Daten eine Echtheitsprüfung der extrahierten biographischen Daten durchgeführt wird, in der durch Prüfung des Kopierschutzes des digital signierten Biographiedatenobjektes sichergestellt wird, dass die extrahierten biographischen Daten zu dem mobilen Endgerät gehören, und
- das Inspektionssystem nur im Fall einer erfolgreichen Echtheitsprüfung die extrahierten biographischen Daten des elektronischen Identifikationsdokuments als gültig betrachtet.

6. Verfahren nach Anspruch 5, bei dem die kryptographischen Daten einen privaten Schlüssel K_{SE_priv} des sicheren Elements umfassen und das digital signierte Biographiedatenobjekt einen zugehörigen zertifizierten öffentlichen Schlüssel K_{SE_pub} des sicheren Elements enthält, **dadurch gekennzeichnet, dass**
- zusammen mit den biographischen Daten der öffentliche Schlüssel K_{SE_pub} des sicheren Elements aus dem digital signierten Biographiedatenobjekt extrahiert wird, und
- zur Echtheitsprüfung
-- das Inspektionssystem eine Aufforderung an das sichere Element übermittelt,
-- das sichere Element die übermittelte Aufforderung mit seinem privaten Schlüssel K_{SE_priv} signiert und die signierte Aufforderung als Antwort an das Inspektionssystem übermittelt, und
-- das Inspektionssystem die übermittelte Antwort mit Hilfe des aus dem digital signierten Biographiedatenobjekt extrahierten öffentlichen Schlüssels K_{SE_pub} verifiziert und nur im Fall einer erfolgreichen Verifikation eine erfolgreiche Echtheitsprüfung feststellt.

7. Verfahren nach Anspruch 5 oder 6, **dadurch gekennzeichnet, dass** das Inspektionssystem mit Hilfe eines öffentlichen Schlüssels K_{PB_pub} einer Personalisierungsbehörde die Signatur des digital signierten Biographiedatenobjekts verifiziert.

8. Verfahren nach wenigstens einem der Ansprüche 5 bis 7, **dadurch gekennzeichnet, dass** das digital signierte Biographiedatenobjekt von dem Applikationsprozessor über eine Nahfeldkommunikations (NFC)-Schnittstelle an das Inspektionssystem übertragen wird.

9. Mobiles Endgerät, das einen Applikationsprozessor mit einem Applikationsprozessorspeicher und ein sicheres Element aufweist, das dazu ausgestaltet ist, im Rahmen der Verfahren nach den Ansprüchen 1 bis 8 eingesetzt zu werden.

10. Mobiles Endgerät nach Anspruch 9, **dadurch gekennzeichnet, dass** das mobile Endgerät eine Schnittstelle für die Nahbereichskommunikation aufweist, insbesondere dass das mobile Endgerät einen NFC-Controller und eine NFC-Antenne für die Nahfeldkommunikation enthält.

## Claims

1. A method for securely storing an electronic identification document on a mobile end device which has an application processor having an application processor memory and a secure element, in which
- a digitally signed biographic data object, which has desired biographic data of the electronic identification document, is stored in the application processor memory and
- cryptographic data for the copy protection of the digitally signed biographic data object are stored in the secure element, wherein the copy protection ensures that the digitally signed biographic data object belongs to the mobile end device.

2. The method according to claim 1, **characterized in that**
- the cryptographic data comprise a private key K_{SE_priv} of the secure element, and
- the digitally signed biographic data object contains an appurtenant certified public key K_{SE_pub} of the secure element.

3. The method according to claim 1 or 2, **characterized in that** the desired biographic data of the electronic identification document comprise biometric data, in particular a biometric facial image and/or one or several fingerprints.

4. The method according to at least one of claims 1 to 3, **characterized in that** the signature of the digitally signed biographic data object is generated with a private key K_{PB_priv} of a personalization government agency.

5. A method for securely reading out an electronic identification document which has been stored according to a method according to any of claims 1 to 4 on a mobile end device which has an application processor having an application processor memory and a secure element, wherein in the method
- a digitally signed biographic data object of the application processor is transferred by the application processor memory to an inspection system,
- the inspection system extracts biographic data from the transferred digitally signed biographic data object,
- an authenticity check of the extracted biographic data is carried out using cryptographic data stored in the secure element in which it is ensured by checking the copy protection of the digitally signed biographic data object that the extracted biographic data belong to the mobile end device, and
- the inspection system views the extracted biographic data of the electronic identification document as valid only in the case of a successful authenticity check.

6. The method according to claim 5, in which the cryptographic data comprise a private key K_{SE_priv} of the secure element and the digitally signed biographic data object contains an appurtenant certified public key K_{SE_pub} of the secure element, **characterized in that**
- together with the biographic data the public key K_{SE_pub} of the secure element is extracted from the digitally signed biographic data object, and
- for checking the authenticity
-- the inspection system transmits a request to the secure element,
-- the secure element signs the transmitted request with its private key KsE_priv and transmits the signed request as a response to the inspection system, and
-- the inspection system verifies the transmitted response with the help of the public key K_{SE_pub} extracted from the digitally signed biographic data object and ascertains a successful authenticity check only in the case of a successful verification.

7. The method according to claim 5 or 6, **characterized in that** the inspection system verifies the signature of the digitally signed biographic data object with the help of a public key K_{PB_pub} of a personalization government authority.

8. The method according to at least one of claims 5 to 7, **characterized in that** the digitally signed biographic data object is transferred by the application processor to the inspection system via a near-field communication (NFC) interface.

9. A mobile end device which has an application processor having an application processor memory and a secure element which is configured to be used within the scope of the methods according to claims 1 to 8.

10. The mobile end device according to claim 9, **characterized in that** the mobile end device has an interface for the close-range communication, in particular that the mobile end device contains an NFC controller and an NFC antenna for the near-field communication.

## Revendications

1. Procédé de mémorisation sécurisée d'un document électronique d'identification sur un terminal mobile comportant un processeur d'application ayant une mémoire de processeur d'application et un élément sécurisé, dans lequel
- un objet de données biographiques signé numériquement, comportant des données biographiques requises du document électronique d'identification, est mémorisé dans la mémoire de processeur d'application, et
- des données cryptographiques pour la protection anti-copie de l'objet de données biographiques signé numériquement sont mémorisées dans l'élément sécurisé, cependant que la protection anti-copie assure que l'objet de données biographiques signé numériquement correspond au terminal mobile.

2. Procédé selon la revendication 1, **caractérisé en ce que**
- les données cryptographiques comprennent une clé privée K_{SE_priv} de l'élément sécurisé, et
- l'objet de données biographiques signé numériquement contient une clé publique K_{SE_pub} de l'élément sécurisé.

3. Procédé selon la revendication 1 ou 2, **caractérisé en ce que** les données biographiques requises du document électronique d'identification sont des données biométriques, en particulier une image faciale biométrique et/ou une ou plusieurs empreintes digitales.

4. Procédé selon au moins une des revendications de 1 à 3, **caractérisé en ce que** la signature de l'objet de données biographiques signé numériquement est générée avec une clé privée K_{PB_priv} d'une autorité de personnalisation.

5. Procédé de lecture sécurisée d'un document électronique d'identification qui a été mémorisé suivant un procédé selon une des revendications de 1 à 4 sur un terminal mobile comportant un processeur d'application ayant une mémoire de processeur d'application et un élément sécurisé, cependant que, lors du procédé,
- un objet de données biographiques signé numériquement est transmis, depuis la mémoire de processeur d'application, du processeur d'application à un système d'inspection,
- le système d'inspection extrait des données biographiques à partir de l'objet de données biographiques signé numériquement transmis,
- avec des données cryptographiques mémorisées dans l'élément sécurisé, un contrôle d'authenticité des données biographiques extraites est effectué, dans lequel, par contrôle de la protection anti-copie de l'objet de données biographiques signé numériquement, il est assuré que les données biographiques extraites correspondent au terminal mobile, et
- le système d'inspection ne considère comme valables les données biographiques du document électronique d'identification extraites que dans le cas d'un contrôle d'authenticité fructueux.

6. Procédé selon la revendication 5, dans lequel les données cryptographiques comprennent une clé privée K_{SE_priv} de l'élément sécurisé, et l'objet de données biographiques signé numériquement contient une clé publique K_{SE_pub} de l'élément sécurisé certifiée correspondante, **caractérisé en ce que**
- en même temps que les données biographiques, la clé publique K_{SE_pub} de l'élément sécurisé est extraite à partir de l'objet de données biographiques signé numériquement, et
- pour le contrôle d'authenticité,
- - le système d'inspection transfère une demande à l'élément sécurisé,
- - l'élément sécurisé signe avec sa clé privée K_{SE_priv} la demande transférée, et la demande signée est transférée en tant que réponse au système d'inspection, et
- - le système d'inspection vérifie, à l'aide de la clé publique K_{SE_pub} extraite à partir de l'objet de données biographiques signé numériquement, la réponse transférée, et ne constate un contrôle d'authenticité fructueux que dans le cas d'une vérification fructueuse.

7. Procédé selon la revendication 5 ou 6, **caractérisé en ce que** le système d'inspection vérifie à l'aide d'une clé publique K_{PB_pub} d'une autorité de personnalisation la signature de l'objet de données biographiques signé numériquement.

8. Procédé selon au moins une des revendications de 5 à 7, **caractérisé en ce que** l'objet de données biographiques signé numériquement est transmis, par l'intermédiaire d'une interface de communication en champ proche (NFC), du processeur d'application au système d'inspection.

9. Terminal mobile qui comporte un processeur d'application ayant une mémoire de processeur d'application et un élément sécurisé, lequel est conçu pour être utilisé dans le cadre du procédé selon les revendications de 1 à 8.

10. Terminal mobile selon la revendication 9, **caractérisé en ce que** le terminal mobile comporte une interface pour la communication en zone proche, en particulier **en ce que** le terminal mobile contient un contrôleur NFC et une antenne NFC pour la communication en champ proche.
